# EUROPÄISCHE PATENTSCHRIFT

(11) **EP 0 799 749 B1**
(45) Veröffentlichungstag und Bekanntmachung des Hinweises auf die Patenterteilung: **14.02.2001**
(21) Anmeldenummer: 97104928.3
(22) Anmeldetag: 22.03.1997
(51) Int. Cl.: B60R 21/00

(54) **Fangvorrichtung für ein Antriebsaggregat**
Catching device for a drive unit
Dispositif de retenue pour un groupe propulseur

(30) Priorität: 06.04.1996 DE 19613870
(43) Veröffentlichungstag der Anmeldung: 08.10.1997
(73) Patentinhaber: Dr.Ing.h.c. F. Porsche Aktiengesellschaft, 70435 Stuttgart (DE)
(72) Erfinder: Rebmann, Rolf, 70186 Stuttgart (DE)

(56) Entgegenhaltungen:
- EP-A- 0 566 840
- EP-A- 0 598 685
- DE-A- 3 141 164
- DE-A- 4 230 669
- DE-A- 4 341 357

## Beschreibung

Die Erfindung bezieht sich auf eine Fangvorrichtung für ein Antriebsaggregat nach dem Oberbegriff des Anspruchs 1.

Aus der DE 37 10 808 Al ist ein Zugband zwischen einem Motor und einem Fahrzeugaufbau bekannt, das zwischen seinen endseitigen Befestigungen gehalten ist und welches nach Abschluß einer Teilverformung der Karosseriestruktur kraftaufnehmend gespannt wird. Aus der EP 059 8 685 A1 ist ein Fahrzeug mit einer Sicherheitseinrichtung für einen Frontalcrash bekannt, die aus einem Fangseil in Form einer Schlaufe besteht, wobei ein querverlaufender Abschnitt des Fangseiles mit einem Halter eines Antriebsaggregats verbunden ist. Das Fangseil ist endgültig mit einergieabsorbierenden Elementen verbunden und über Arme zum Hlater umgelenkt. Bei einem Frontalcrash bewegt sich das Antriebsaggregat entgegen der Fahrtrichtung und wird gegen den querverlaufenden Abschnitt des Fangseiles gedrückt.

Aufgabe der Erfindung ist es, eine Fangvorrichtung für ein Antriebsaggregat eines Kraftfahrzeuges zu schaffen, die in einfacher Weise montierbar ist und eine zwangsgeführte Bewegung des Aggregates bei einem Crashfall gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß über die aus einem Seil bestehende Fangvorrichtung das Antriebsaggregat, welches unmittelbar hinter der Sitzanlage angeordnet ist, bei einem Crashfall in einer Position gehalten wird, die eine Gefährdung von Personen ausschließt. Das Fangseil weist hierzu eine solche Lage auf, daß Schwingungsbewegungen des Aggregats einerseits zugelassen werden und andererseits das Aggregat im wesentlichen in seiner Montagelage bzw. in einer abgekippten Stellung gehalten wird.

Das Fangseil ist in einfacher Weise zu montieren, wobei es mit seinen freien Enden im Querträger des Fahrzeugaufbaus im Abstand getrennt befestigt wird und eine Seilschlaufe in einer Halterung eingehängt ist. Diese Halterung ist endseitig des Kurbelgehäuses über Schrauben festgesetzt.

Die Halterung kann vormontiert werden, wobei das Seil dann nur noch eingehängt werden muß. Eine die Seilschlaufe aufnehmende Rohrhülse im Bereich der Halterung, dient zur besseren Fixierung und Führung des Seils in diesem Abschnitt sowie zur Schonung des Seiles.

Die Verbindung im Querträger erfolgt über eine Spanneinrichtung, in welche die Seilenden getrennt voneinander in Klemmhülsen gehalten werden. Diese weisen endseitig einen Gewindeabschnitt auf, so daß ein gezieltes Festspannen am Querträger mit Toleranzausgleich über eine aufgesetzte Gewindemutter erfolgen kann.

Durch die - in bezug auf das Antriebsaggregat - weit hinten liegende Verbindung des Aggregates mit dem Fangseil, kann bei einem Crashfall ein Abkippen in Verbindung mit einer möglichen Längsverschiebung erfolgen, so daß in keinem Fall ein so weites Vorschieben erfolgen kann, daß das Aggregat nach einem Crash in die Sitzanlage hineinragt.

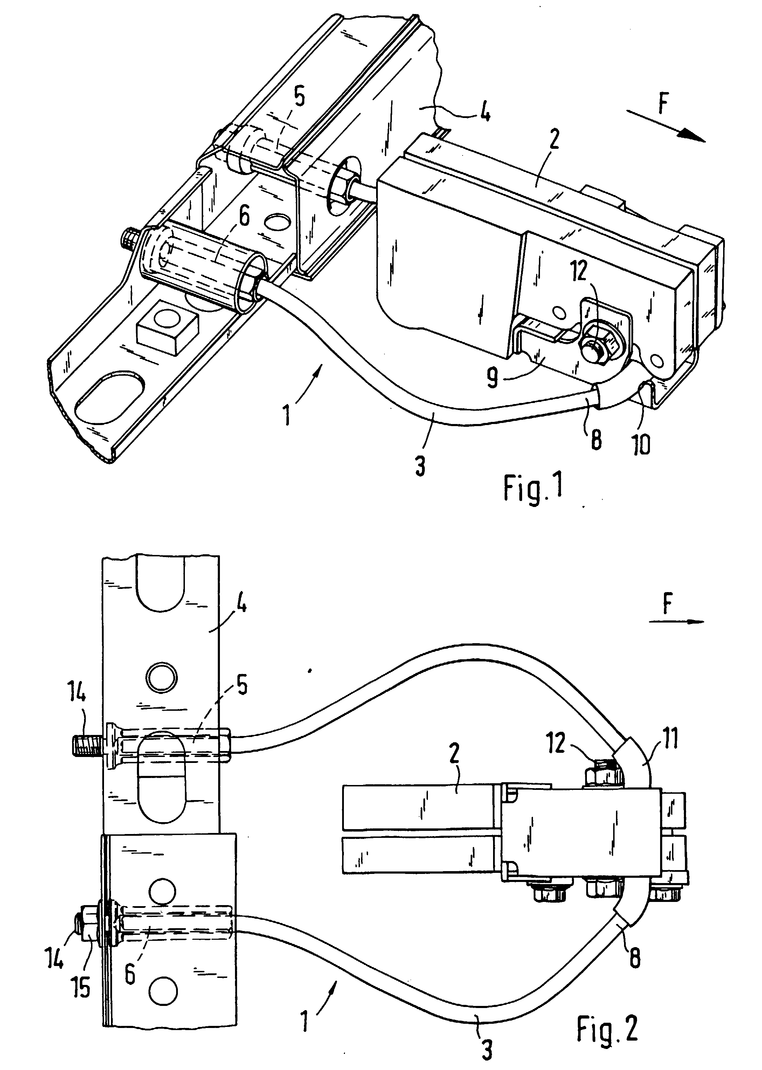

Ein Ausführungsbeispiel der Erfindung ist in der Zeichnung dargestellt und wird im folgenden näher beschrieben. Es zeigen
- Fig. 1: eine schaubildliche Darstellung einer Fangvorrichtung mit einem Seil,
- Fig. 2: eine Draufsicht auf die Fangvorrichtung und

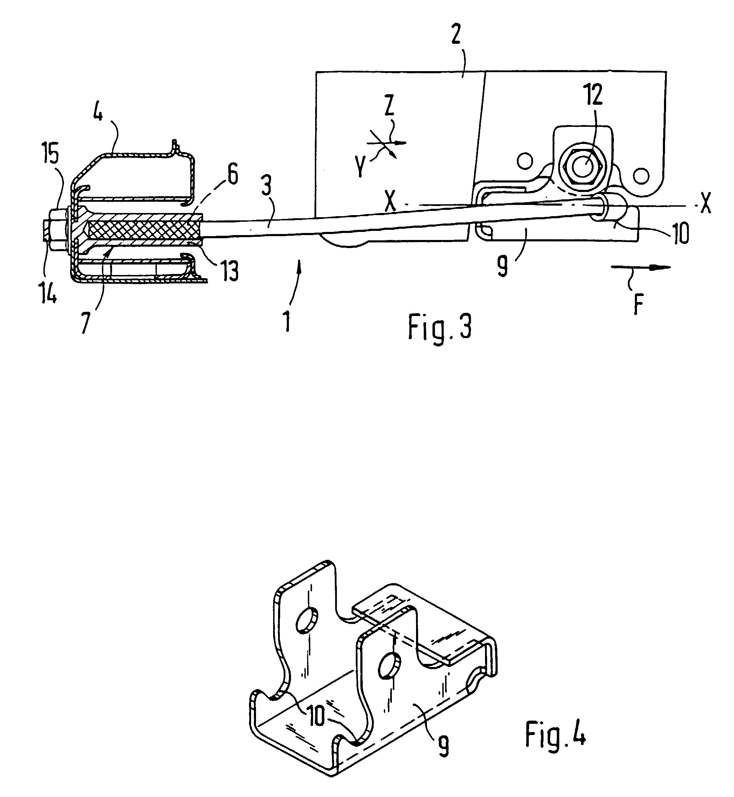

- Fig. 3: eine Seitenansicht der Fangvorrichtung mit Spanneinrichtung am Querträger des Fahrzeugaufbaus.

Eine Fangvorrichtung 1 für ein Antriebsaggregat 2, insbesondere für einen Mittelmotor der - in bezug auf die Fahrtrichtung F - unmittelbar hinter der Sitzanlage angeordnet ist, umfaßt im wesentlichen ein Fangseil 3, welches einerseits an einem Querträger 4 und andererseits am Aggregat 2 befestigt bzw. gehalten ist.

Das Fangseil 3 ist als sogenannte Schlaufe ausgeführt und mit seinen beiden freien Enden 5, 6 über eine Spanneinrichtung 7 getrennt im Querträger 4 befestigt. Der Schlaufenbogen 8 ist in einer Halterung 9 in einer nach oben offenen Ausnehmung 10 eingehängt. Der Schlaufenbogen 8 ist in einer übergesteckten Rohrhülse 11 angeordnet, die sich über die Halterung 9 hinaus erstreckt und das Fangseil auch gegen eine Abnutzung schützt.

Die Halterung 9 besteht aus einem im Querschnitt U-förmigen Blechteil, deren Schenkel Aufnahmebohrungen für eine Befestigungsschraube 12 aufweisen. In abgesetzten Bereichen der Schenkel sind die Ausnehmungen 10 für das Seil 3 bzw. für die Rohrhülse 11 vorgesehen. Über die Befestigungsschraube 12 ist die Halterung 9 am Kurbelgehäuse des Aggregats 2 in der Längsmittenachse des Aggregats festgesetzt.

Die freien Enden des Fangseils 3 sind in einer Klemmhülse 13 eingepreßt gehalten, welche gleichzeitig am freien Ende einen Gewindeansatz 14 aufweist, auf dem eine Gewindemutter 15 zum Festsetzen des Fangseiles 3 am Querträger 4 aufschraubbar ist.

Vom Antriebsaggregat 2 ist nur das Kurbelgehäuse nur teilweise angedeutet, wobei der Motor in bezug auf die Fahrtrichtung F vor dem Kurbelgehäuse vorgesehen ist, so daß der Einhängeort für das Seil 3 relativ weit hinten im Bereich des Aggregats 2 liegt. Hierdurch wird im Crashfall eine kombinierte Längs- und Abkippbewegung des Aggregats zum Fahrzeugboden hin möglich. Die Lage des Einhängeortes in der Halterung 9 erfolgt in einer Ebene X-X, die oberhalb der Lage der Spannvorrichtung 7 liegt.

Das Fangseil 3 weist zwischen seinen Befestigungsorten am Querträger 4 sowie dem Einhängeort in der Halterung 9 eine gewisse Lose auf, damit die Schwingbewegung des Antriegsaggregats im Betrieb nicht behindert wird.

## Patentansprüche

1. Fangvorrichtung für ein Antriebsaggregat (2), insbesondere für einen Mittelmotor eines Kraftfahrzeuges, über ein Fangseil (3), welches mit einem Träger (T) der Aufbaustruktur sowie mit einem Gehäuse des Antriebsaggregates (M) verbunden ist, wobei das Fangseil (3) mit seinen beiden freien Enden über eine Spanneinrichtung (7) in einem Querträger (4) der Fahrzeug-Aufbaustruktur befestigt ist und ein Schlaufenbogen (8) des Fangseils (3) in eine Aufnahme (10) einer Halterung (9) einhängbar ist, die mit einem Kurbelgehäuse (2) des Aggregats verbindbar ist dadurch gekennzeichnet, daß die Aufnahme (10) für das Fangseil (3) - in Bezug auf die Fahrtrichtung (F) - vor dem Querträger (4) in einer Ebene (X-X) angeordnet ist, die oberhalb der Spanneinrichtung (7) liegt, und das Antriebsaggregat im Crashfall in eine kombinierte Längs- und Kippbewegung (Z,Y) in Fahrtrichtung (F) bewegbar ist.

2. Vorrichtung nach Anspruch 1, dadurch gekennzeichnet, daß das Fangseil (3) eine der Motorbewegungen entsprechende Lose zwischen seinen Befestigungen am Querträger (4) und seinem Einhängeort in der Halterung (9) aufweist.

3. Vorrichtung nach den Ansprüchen 1 oder 2, dadurch gekennzeichnet, daß das Fangseil (3) im Schlaufenbogen (8) mit einer Rohrhülse (11) versehen ist, die in der Aufnahme (10) der Halterung (9) einhängbar ist.

4. Vorrichtung nach den Ansprüchen 1 bis 3, dadurch gekennzeichnet, daß die Halterung (9) im Querschnitt U-förmig ausgebildet ist und deren Schenkel am Kurbelgehäuse (2) über eine Schraube (12) festsetzbar sind und die Schenkel als Aufnahme (10) eine Ausnehmung zum Einhängen der Rohrhülse (11) aufweisen.

## Claims

1. A safety device for a drive unit (2), in particular for a mid engine of a motor vehicle, utilising a safety cable (3) connected to a support (T) of the body structure and a housing of the drive unit (M), wherein the two free ends of the safety cable (3) are fixed in a transverse member (4) of the vehicle body structure by a clamping device (7), and a loop bend (8) of the safety cable (3) is suspendable in a retainer (10) of a mounting (9) connectable to a crankcase (2) of the unit, characterised in that the retainer (10) for the safety cable (3) - relative to the direction of travel (F) - is arranged upstream of the transverse member (4) in a plane (X-X) lying above the clamping device (7), and the drive unit is movable in a combined longitudinal and tilting movement (Z, Y) in the direction of travel (F) in the event of a crash.

2. A device according to claim 1, characterised in that the safety cable (3) has a degree of slack, corresponding to the movements of the engine, between its fastenings on the transverse member (4) and its suspension point in the mounting (9).

3. A device according to claims 1 or 2, characterised in that the loop bend (8) of the safety cable (3) is provided with a tubular sleeve (11) suspendable in the retainer (10) of the mounting (9).

4. A device according to claims 1 to 3, characterised in that the mounting (9) is U-shaped in cross-section and its arms are attachable to the crankcase (2) by a screw (12) and the arms have a recess as a retainer (10) for suspending the tubular sleeve (11).

## Revendications

1. Dispositif de retenue pour un groupe moteur (2), notamment pour un moteur central d'un véhicule automobile, au moyen d'un câble de retenue (3) qui est relié à un support (T) de la structure de la carrosserie ainsi qu'à un carter du groupe moteur (M), le câble de retenue (3) étant fixé par ses deux extrémités libres, au moyen d'un dispositif de serrage (7), dans une traverse (4) de la structure de la carrosserie du véhicule, et un arc (8) d'une boucle du câble de retenue (3) pouvant être accroché dans un logement (10) d'une fixation (9) qui peut être reliée à un carter-moteur du groupe moteur, caractérisé en ce que le logement (10) du câble de retenue (3) est disposé devant - par rapport au sens de marche (F) - la traverse (4), dans un plan X-X qui se situe au-dessus du dispositif de serrage (7), et en cas de collision, le groupe moteur peut se déplacer dans le sens de marche (F) dans un mouvement longitudinal et basculant combiné (Z, Y).

2. Dispositif selon la revendication 1, caractérisé en ce que le câble de retenue (3) présente un mou, qui correspond aux mouvements du moteur, entre ses fixations sur la traverse (4) et son emplacement d'accrochage dans la fixation (9).

3. Dispositif selon les revendications 1 ou 2, caractérisé en ce que le câble de retenue (3) est pourvu, dans l'arc (8) de la boucle, d'une douille tubulaire (11) qui peut être accrochée dans le logement (10) de la fixation (9).

4. Dispositif selon les revendications 1 à 3, caractérisé en ce que la fixation (9) présente une section en U dont les branches peuvent être fixées au carter-moteur (2) par une vis (12), et en ce que les branches présentent, en tant que logement (10), un évidement destiné à l'accrochage de la douille tubulaire (11).
